# EUROPÄISCHE PATENTSCHRIFT

(11) **EP 1 118 596 B1**
(45) Veröffentlichungstag und Bekanntmachung des Hinweises auf die Patenterteilung: **15.10.2003**
(21) Anmeldenummer: 00125339.2
(22) Anmeldetag: 30.11.2000
(51) Int. Cl.: C03C 3/093, C03C 3/091

(54) **Alkalifreies Aluminoborosilicatglas und dessen Verwendung**
Alkali-free aluminoborosilicate glass and its use
Verre aluminoborosilicate depourvu d'alcalins et des utilisations

(30) Priorität: 12.01.2000 DE 10000839
(43) Veröffentlichungstag der Anmeldung: 25.07.2001
(73) Patentinhaber: Schott Glas, 55122 Mainz (DE); Carl-Zeiss-Stiftung trading as Schott Glas, 55122 Mainz (DE)
(72) Erfinder: Peuchert, Ulrich, Dr., 55129 Mainz (DE); Brix, Peter, Dr., 55116 Mainz (DE)

(56) Entgegenhaltungen:
- EP-A- 0 672 629
- EP-A- 0 953 549
- EP-A- 1 070 681
- EP-A- 1 078 893
- WO-A-98/27019
- DE-A- 19 601 922
- DATABASE WPI Section Ch, Week 199717 Derwent Publications Ltd., London, GB; Class L01, AN 1997-188222 XP002168035 & JP 09 048632 A (NIPPON ELECTRIC GLASS CO), 18. Februar 1997 (1997-02-18)
- DATABASE WPI Section Ch, Week 199734 Derwent Publications Ltd., London, GB; Class L01, AN 1997-369217 XP002168036 & JP 09 156953 A (NIPPON ELECTRIC GLASS CO), 17. Juni 1997 (1997-06-17)
- DATABASE WPI Section Ch, Week 200040 Derwent Publications Ltd., London, GB; Class L01, AN 2000-454638 XP002168037 & JP 2000 159541 A (NIPPON ELECTRIC GLASS CO), 13. Juni 2000 (2000-06-13)

## Beschreibung

Gegenstand der Erfindung ist ein alkalifreies Aluminoborosilicatglas. Gegenstand der Erfindung sind auch Verwendungen dieses Glases.

An Gläser für Anwendungen als Substrate in der Flüssigkristall-Flachdisplaytechnologie, z. B. in TN (Twisted Nematic)/STN (Super Twisted Nematic) - Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Trägermaterial für integrierte Halbleiterschaltkreise z. B. in TFT-Displays ("chip on glass") erfordert darüber hinaus die thermische Anpassung an das Dünnfilmmaterial Silicium. Dieses wird üblicherweise als amorphes Silicium (a-Si) bei niedrigen Temperaturen bis 300 °C auf dem Glassubstrat abgeschieden. Durch eine nachfolgende Wärmebehandlung bei Temperaturen von ca. 600 °C rekristallisiert das amorphe Silicium partiell. Die resultierende teilweise kristalline poly-Si-Schicht ist aufgrund der a-Si-Anteile charakterisiert durch einen Wert der thermischen Ausdehnung von a 20/300 = 3,7 x 10⁻⁶/K. Je nach dem Verhältnis von a-Si zu poly-Si kann der thermische Ausdehnungskoeffizient α 20/300 zwischen 2,9 · 10⁻⁶/K und 4,2 · 10⁻⁶/K variieren. Werden durch Hochtemperaturbehandlungen oberhalb 700 °C bzw. direkte Abscheidung über CVD-Prozesse weitestgehend kristalline Si-Schichten generiert, so gewünscht auch in der Dünnschichtphotovoltaik, ist ein Substrat mit deutlich reduzierter thermischer Dehnung bis 3,2 x 10⁻⁶/K oder weniger erforderlich.

Für Anwendungen in der Display- und Photovoltaiktechnologie ist femer die Abwesenheit von Alkaliionen Bedingung. Herstellungsbedingte Anteile von Natriumoxid unterhalb 1000 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Einem auf die Halbleiter-Microstruktur nachteilig wirkenden Schrumpf ("compaction") des Substrates während der Herstellung, insbesondere im Falle von TFT-Displays, kann durch Einstellen einer geeigneten temperaturabhängigen Viskositätskennlinie des Glases entgegengewirkt werden. Hinsichtlich der thermischen Prozeßund Formstabilität sollte es bei einerseits nicht zu hohen Schmelz- und Verarbeitungs (V_{A}) -temperaturen, d. h. bei einem V_{A}≤ 1350 °C, eine ausreichend hohe Transformationstemperatur, d. h. T_{g} > 700°C aufweisen.

Die Anforderungen an Glassubstrate für die LCD-Displaytechnologie bzw. Dünnschicht-Photovoltaik-Technologie sind auch in "Glass Substrates for AMLCD applications: properties and implications" von J.C. Lapp, SPIE Proceedings, Vol. 3014, Invited paper (1997) beschrieben bzw. in "Photovoltaik-Strom aus der Sonne" von J. Schmid, Verlag C.F. Müller, Heidelberg 1994.

Das genannte Anforderungsprofil wird am ehesten durch Erdalkalialuminoborosilicatgläser erfüllt. Die bekannten und in den folgenden Schriften beschriebenen Gläser für Display- oder Solarzellensubstrate weisen jedoch noch Nachteile auf und erfüllen nicht den gesamten Anforderungskatalog:

Zahlreiche Schriften beschreiben Gläser, mit geringen MgO- und/oder CaO-Gehalten:JP 9-169 538 A, JP 4-160 030 A, JP 9-100 135 A, EP 714 862 A1, EP 341 313 B1, US 5,374,595, JP 9-48632 A, JP 8-295530 A, WO 97/11919 und WO 97 11920. Diese Gläser besitzen nicht die gewünschte Schmelzbarkeit, was sehr hohe Temperaturen bei den Viskositäten 10² dPas und 10⁴ dPas bestätigen, und weisen relativ hohe Dichten auf. Gleiches gilt für die MgO-freien Gläser der DE 37 30 410 A1, US 5,116,787 und US 5,116,789.

Andererseits zeigen Gläser mit hohen Gehalten an MgO, wie sie in JP 61-123 536 A beschrieben sind, Mängel hinsichtlich ihrer chemischen Beständigkeit sowie ihres Entglasungs- und Entmischungverhaltens.

Auch die Gläser der WO 98/27019 sind mit ihren sehr geringen Anteilen an BaO und SrO kristallisationsanfällig.

Gläser mit hohen Gehalten an den schweren Erdalkalioxiden BaO und/oder SrO, wie sie in EP 341313 B1 beschrieben sind, besitzen unerwünscht hohe Dichten und sind nicht gut schmelzbar. Dies gilt auch für die Gläser der JP 10-72237 A. Nachweislich der Beispiele weisen die Gläser hohe Temperaturen bei den Viskositäten 10⁴ dPas und 10² dPas auf.

Auch Gläser mit geringen Borsäuregehalten weisen zu hohe Schmelztemperaturen bzw. aufgrund dessen bei verfahrensbedingt vorgegebenen Schmelzund Verarbeitungstemperaturen zu hohe Viskositäten auf. Dies betrifft die Gläser aus JP 10-45422 A, JP 9-263421 A und JP 61-132536 A. In Kombination mit niedrigen BaO-Gehalten weisen solche Gläser außerdem eine hohe Entglasungsneigung auf.

Dagegen zeigen Gläser mit hohen Anteilen an Borsäure, wie sie beispielsweise in US 4,824,808 beschrieben sind, keine ausreichende Temperaturbeständigkeit und chemische Beständigkeit, insbesondere gegenüber salzsauren Lösungen.

Auch die Gläser, die relativ wenig SiO₂ enthalten, zeigen, insbesondere wenn sie größere Mengen an B₂O₃ und/oder MgO enthalten und erdalkaliarm sind, keine ausreichend hohe chemische Beständigkeit. Dies betrifft die Gläser aus WO 97/11919 und EP 672 629 A2. Die SiO₂-reicheren Varianten der letztgenannten Schrift weisen nur geringe Al₂O₃-Anteile auf, was nachteilig für das Kristallisationsverhalten ist.

Die in JP 9-12333 A beschriebenen Gläser für Festplatten sind vergleichsweise Al₂O₃- bzw. B₂O₃-arm, wobei letztgenannte Komponente nur eine fakultative ist. Die Gläser sind hoch erdalkalioxidhaltig und besitzen eine hohe thermische Dehnung, die sie für den Einsatz in der LCD- bzw. PV-Technologie ungeeignet macht.

DE 42 13 579 A1 beschreibt Gläser für TFT-Anwendungen mit thermischen Ausdehnungskoeffizienten < 5,5 x 10⁻⁶/K, ausweislich der Beispiele ≥4,0 x 10⁻⁶/K. Diese Gläser mit relativ hohen Anteilen an B₂O₃ bei vergleichsweise niedrigen SiO₂-Gehalten sind nicht sehr chemisch resistent, insbesondere nicht gegenüber verdünnter Salzsäure.

DE 196 01 022 A1 beschreibt Gläser aus einem sehr variablen Zusammensetzungesbereich, die zwingend ZrO₂ und SnO enthalten. Diese Al₂O₃-armen Gläser neigen aufgrund ihres ZrO₂-Anteils zu Glasfehlern.

Aus DE 196 17 344 C1 und DE 196 03 689 C1 der Anmelderin sind alkalifreie zinnoxidhaltige SiO₂-arme bzw. Al₂O₃-arme Gläser mit einem thermischen Ausdehnungskoeffizieten α_{20/300} von ca. 3,7 · 10⁻⁶/K und sehr guten chemischen Beständigkeiten bekannt. Sie sind geeignet für den Einsatz in der Displaytechnik. Da sie jedoch zwingend ZnO enthalten, sind sie insbesondere für eine Verarbeitung auf einer Floatanlage nicht optimal geeignet. Insbesondere bei höheren Gehalten ZnO (> 1,5 Gew. -%) besteht nämlich die Gefahr der bildung von ZnO-Belägen auf der Glasoberfläche durch Verdampfung und anschließende Kondensation im Heißformgebungsbereich.

Auch JP 9-156 953 A betrifft alkalifreie Gläser für die Displaytechnik, die Al₂O₃-arm sind. Die Temperaturbeständigkeit dieser Gläser ist, wie die Transformationstemperaturen der Beispielgläser belegen, nicht ausreichend.

In den ungeprüften japanischen Veröffentlichungen JP 10-25132 A, JP 10-114538 A, J P 10-130034 A, J P 10-59741 A, J P 10-324526 A, J P 11-43350 A, JP 10-139467 A, JP 10-231139 A und JP 11-49520 A werden sehr große und mit vielen fakultativen Komponenten variierbare Zusammensetzungsbereiche für Displaygläser genannt, denen jeweils ein oder mehrere bestimmte Läuterungsmittel zugesetzt werden. Diese Schriften geben jedoch keinerlei Hinweise, wie gezielt Gläser mit den kompletten beschriebenen Anforderungsprofil erhalten werden können.

Es ist Aufgabe der Erfindung, Gläser bereitzustellen, die die genannten physikalischen und chemischen Anforderungen an Glassubstrate für Flüssigkristall-Displays, insbesondere für TFT-Displays, und für Dünnschichtsolarzellen, insbesondere auf Basis von µc-Si gestellt wird, erfüllen, Gläser, die eine hohe Temperaturbeständigkeit, einen prozeßgünstigen Verarbeitungsbereich und eine ausreichende Entglasungsstabilität aufweisen.

Die Aufgabe wird durch Aluminoborosilicatgläser gemäß dem Hauptanspruch gelöst.

Das Glas enthält zwischen > 58 und 65 Gew.-% SiO₂. Bei geringeren Gehalten verschlechtert sich die chemische Beständigkeit, bei höheren Anteilen nimmt die thermische Ausdehnung zu geringe Werte an und nimmt die Kristallisationsneigung des Glases zu. Bevorzugt ist ein Höchstgehalt von 64,5 Gew.-%.

Das Glas enthält > 20 bis 25 Gew.-% Al₂O₃. Al₂O₃ wirkt sich positiv auf die Temperaturstabilität des Glases, ohne die Verarbeitungstemperatur zu sehr anzuheben. Bei einem geringen Gehalt erhöht sich die Kristallisationsfälligkeit des Glases. Bevorzugt ist ein Gehalt von wenigstens 20,5 Gew.-%, insbesondere von wenigstens 21 Gew.-% Al₂O₃. Bevorzugt ist ein Gehalt von höchstens 24 Gew.-% Al₂O₃.

Der B₂O₃-Gehalt ist auf höchstens 11,5 Gew.-% beschränkt, um eine hohe Transformationstemperatur T_{g} zu erzielen. Auch würden höhere Gehalte die chemische Beständigkeit verschlechtern. Vorzugsweise beträgt der B₂O₃-Gehalt höchstens 11 Gew.-%. Der B₂O₃-Gehalt beträgt mehr als 6 Gew.-%, um eine gute Schmelzbarkeit und die gute Kristallisationsbeständigkeit des Glases zu gewährleisten.

Ein wesentlicher Glasbestandteil sind die netzwerkwandelnden Erdalkalioxide. Vor allem durch Variation ihrer Anteile wird ein thermischer Ausdehnungskoeffizient α20/300 zwischen 2,8 · 10⁻⁶/K und 3,6 · 10⁻⁶/K erzielt. Die einzelnen Oxide liegen in den folgenden Anteilen vor:

Das Glas enthält 4 bis < 6,5 Gew.-% MgO und > 4,5 bis 8 Gew.-% CaO. Eher hohe Anteile an den beiden Komponenten wirken sich positiv auf die gewünschten Eigenschaften niedrige Dichte und niedrige Verarbeitungstemperatur aus, während eher geringe Anteile die Kristallisationsbeständigkeit und die chemische Beständigkeit begünstigen.

Weiter enthält das Glas BaO, und zwar wenigstens 0,5 Gew.-%. Der BaO-Höchstgehalt ist auf weniger als 5 Gew.-% beschränkt. So werden die gute Schmelzbarkeit gewährleistet und die Dichte niedrig gehalten.

Das Glas kann weiterhin bis zu < 4 Gew.-% des ebenfalls vergleichsweise schweren Erdalkalioxides SrO enthalten. Die Beschränkung dieser fakultiven Komponente auf diesen geringen Höchstgehalt ist insbesondere für eine geringe Dichte und eine gute Schmelzbarkeit des Glases vorteilhaft. Zur Verbesserung der Kristallisationsstabilität ist es bevorzugt, daß SrO vorhanden ist, und zwar vorzugsweise mit wenigstens 0,2 Gew.-%.

Der Gesamtgehalt an BaO und SrO beträgt dabei wenigstens > 3 Gew.-%, um eine ausreichende Kristallisationsstabilität zu gewährleisten.

Das Glas kann bis zu 2 Gew.-% ZnO, bevorzugt bis zu < 2 Gew.-% ZnO, enthalten, ZnO hat als Netzwerkwandler eine gerüstlockernde Funktion, und es hat einen geringen Einfluß auf die thermische Ausdehnung als die Erdalkalioxide. Es hat einen ähnlichen Einfluß auf die Viskositätskennlinie wie B₂O₃. Vorzugsweise, insbesondere bei einer Verarbeitung des Glases im Floatverfahren, ist der ZnO-Anteil auf höchstens 1,5 Gew.-% beschränkt. Höhere Anteile würden die Gefahr störender ZnO-Beläge auf einer Glasoberfläche erhöhen, die sich durch Verdampfung und anschließende Kondensation. im Heißformgebungsbereich bilden können.

Das Glas ist alkalifrei. Unter alkalifrei wird hierbei verstanden, daß es im wesentlichen frei ist von Alkalioxiden, wobei es Verunreinigungen von weniger als 1000 ppm enthalten kann.

Die Gläser können bis zu 2 Gew.-% ZrO + TiO₂ enthalten, wobei sowohl der TiO₂-Gehalt als auch der ZrO₂-Gehalt einzeln bis zu 2 Gew.-% betragen kann. ZrO₂ erhöht vorteilhaft die Temperaturstabilität des Glases. Aufgrund seiner Schwerlöslichkeit erhöht es jedoch die Gefahr von ZrO₂-haltigen Schmelzrelikten (sog. "Zirkonnester") im Glas. Daher wird vorzugsweise auf die Zugabe von ZrO₂ verzichtet. Geringe Gehalte an ZrO₂, die von der Korrosion zirkonhaltigen Wannenmaterials herrühren, sind unproblematisch. TiO₂ setzt vorteilhaft die Solarisationsneigung, d. h. die Abnahme der Transmission im sichtbaren Wellenlängenbereich aufgrund von UV-VIS-Strahlung, herab. Bei Gehalten von mehr als 2 Gew.-% können durch Komplexbildung mit Fe³⁺-lonen, die im Glas in geringen Gehalten infolge von Verunreinigungen der eingesetzten Rohstoffe vorhanden sind, Farbstiche auftreten.

Die Gläser können herkömmliche Läutermittel in herkömmlichen Mengen enthalten: So kann es bis zu 1,5 Gew.-% As₂O₃, Sb₂O₃, SnO₂ und/oder CeO₂ enthalten. Auch ist der Zusatz von je 1,5 Gew.-% Cl⁻ (beispielsweise als BaCl₂), F⁻(z. B. als CaF₂) oder SO₄²⁻ (z. B. als BaSO₄) möglich. Die Summe aus As₂O₃, Sb₂O₃, CeO_{2,} SnO_{2,} Cl⁻, F⁻ und SO₄²⁻ soll jedoch 1,5 Gew.-% nicht überschreiten.

Wenn auf die Läutermittel As₂O₃ und Sb₂O₃ verzichtet wird, sind die Gläser nicht nur mit den verschiedenen Ziehverfahren, sondern auch mit dem Floatverfahren verarbeitbar.

Beispielsweise im Hinblick auf eine einfache Gemengezubereitung ist es von Vorteil, daß sowohl auf ZrO₂ als auch auf SnO₂ verzichtet werden kann und dennoch Gläser mit dem genannten Eigenschaftsprofil, insbesondere mit hoher thermischer und chemischer Beständigkeit und mit geringer Kristallisationsneigung, erhalten werden.

### Ausführungsbeispiele:

Aus herkömmlichen, von unvermeidlichen Verunreinigungen abgesehen im wesentlichen alkalifreien, Rohstoffen wurden bei 1620°C Gläser in Pt/lr-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt.

Die Tabelle zeigt 11 Beispiele erfindungsgemäßer Gläser mit ihren Zusammensetzungen (in Gew.-% auf Oxidbasis) und ihren wichtigsten Eigenschaften. Das Läutermittel SnO₂ mit einem Anteil von 0,3 Gew.-% ist nicht aufgeführt. Folgende Eigenschaften sind angegeben:
- der thermische Ausdehnungskoeffizient α_{20/300} [10⁻⁶/K]
- die Dichte p [g/cm³]
- die dilatometrische Transformationstemperatur T_{g} [°C] nach DIN 52324
- die Temperatur bei der Viskosität 10⁴ dPas (bezeichnet als T 4 [°C])
- die Temperatur bei der Viskosität 10² dPas (bezeichnet als T2 [ °C], berechnet aus der Vogel-Fulcher-Tammann-Gleichung
- der Brechwert n_{d}
- eine Säurebeständigkeit "HCl" als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²].
- die Beständigkeit gegenüber gepufferter Fluorwasserstoffsäure "BHF" als Gewichtsverlust (Abtragswert) vonallseitig polierten Glasplättchen der Abmessungen 50 mm x 50 mm x 2 mm nach Behandlung mit 10 % iger NH₄F · HF für 20 Min. bei 23 °C [mg/cm²].

**Tabelle:**

| Beispiele: Zusammensetzungen (in Gew.-% auf Oxidbasis) und wesentliche Eigenschaften von erfindungsgemäßen Gläsern. | | | | | | |
|---|---|---|---|---|---|---|
| | 1 | 2 | 3 | 4 | 5 | 6 |
| SiO₂ | 59,0 | 58,5 | 58,5 | 60,0 | 58,5 | 60,7 |
| B₂O₃ | 7,0 | 6,5 | 6,5 | 6,6 | 8,1 | 6,5 |
| Al₂O₃ | 20,5 | 21,2 | 21,2 | 21,2 | 21,2 | 20,2 |
| MgO | 4,5 | 4,5 | 4,5 | 4,2 | 4,2 | 4,2 |
| CaO | 5,0 | 5,0 | 5,0 | 4,6 | 4,6 | 4,8 |
| SrO | 1,9 | 0,5 | 3,5 | 2,6 | 2,6 | 2,8 |
| BaO | 1,8 | 3,5 | 0,5 | 0,5 | 0,5 | 0,5 |
| ZnO | - | - | - | - | - | - |
| α _{20/300} [10⁻⁶/K] | 3,44 | 3,42 | 3,55 | 3,31 | 3,33 | 3,37 |
| p [g/cm³] | 2,50 | 2,52 | 2,52 | 2,48 | 2,48 | 2,48 |
| T_{g}[°C] | 741 | 747 | 742 | 749 | 738 | 745 |
| T 4 [°C) | 1279 | 1285 | 1263 | 1293 | 1276 | 1292 |
| T 2 [°C] | 1629 | 1632 | 1620 | 1648 | 1627 | 1650 |
| n_{d} | 1,526 | 1,528 | 1,528 | 1,524 | 1,524 | 1,523 |
| HCl [mg/cm²] | 0,88 | 0,76 | n. b. | n. b. | n. b. | 0,68 |
| BHF [mg/cm²1 | 0,66 | 0,65 | 0,73 | 0,67 | 0,67 | 0,65 |
| n. b.= nicht bestimmt (Fortsefzung der Tabelle s. nächste Seite) | | | | | | |

**Fortsetzung Tabelle:**

| | 7 | 8 | 9 | 10 | 11 |
|---|---|---|---|---|---|
| SiO₂ | 59,5 | 59,3 | 58,3 | 58,5 | 58,2 |
| B₂O₃ | 7,5 | 6,1 | 6,1 | 6,5 | 7,2 |
| Al₂O₃ | 20,2 | 20,2 | 20,2 | 22,8 | 20,9 |
| MgO | 4,2 | 6,0 | 6,0 | 4,1 | 4,1 |
| CaO | 4,8 | 4,8 | 4,8 | 4,6 | 6,0 |
| SrO | 2,8 | 2,8 | 2,8 | 0,2 | 0,2 |
| BaO | 0,5 | 0,5 | 0,5 | 3,0 | 3,1 |
| ZnO | - | - | 1,0 | - | - |
| α _{20/300} [10⁻⁶/K] | 3,38 | 3,54 | 3,57 | 3,24 | 3,47 |
| p [g/cm³ | 2,48 | 2,51 | 2,53 | 2,50 | 2,51 |
| T_{g}[°C] | 736 | 744 | 738 | 756 | 740 |
| T4[°C] | 1278 | 1271 | 1255 | 1298 | 1264 |
| T2[°C] | 1633 | 1617 | 1695 | 1647 | 1624 |
| N_{d} | 1,523 | 1,529 | 1,531 | 1,526 | 1,528 |
| HCl [mg/cm²] | n. b. | 0,67 | 0,66 | 0,94 | n. b. |
| BHF [mg/cm²] | 0,66 | 0,74 | 0,77 | 0,64 | 0,62 |
| n. b.= nicht bestimmt | | | | | |

Wie die Ausführungsbeispiele verdeutlichen, besitzen die erfindungsgemäßen Gläser folgende vorteilhafte Eigenschaften:
- eine thermische Dehnung α 20/300 zwischen 2,8 10⁻⁶/K und 3,6 x 10⁻⁶/K, damit angepaßt an das Ausdehnungsverhalten von amorphen und auch zunehmend polykristallinem Silicium.
- mit T_{g} > 700 °C eine hohe Transformationstemperatur, also eine hohe Temperturbeständigkeit. Dies ist wesentlich für einen möglichst geringen herstellungsbedingten Schrumpf ("compaction") und für die Verwendung der Gläser als Substrate für Beschichtungen mit amorphen Si-Schichten und deren anschließende Temperung.
- mit ρ < 2,600 g/cm³ eine geringe Dichte
- eine Temperatur bei der Viskosität 10⁴ dPas von maximal 1350 °C, und eine Temperatur bei der Viskosität 10² dPas von maximal 1720 °C, was hinsichtlich der Heißformgebung sowie Schmelzbarkeit eine geeignete Viskositätskennlinie bedeutet. Die Gläser sind als Flachgläser mit den verschiedenen Zieverfahren, z. B. Micro-sheet-Down-draw-, Up-draw-oder Overflow-fusion-Verfahren und in bevorzugter Ausführung, wenn sie frei von As₂O₃ und Sb₂O₃ sind, auch mit dem Floatverfahren herstellbar.
- eine hohe chemische Beständigkeit, dokumentiert durch gute Beständigkeit gegenüber Salzsäure und gegenüber gepufferter Flußsäurelösung, was sie ausreichend inert gegen die bei der Herstellung von Flachbildschirmen verwendeten Chemikalien macht.
- mit n_{d} ≤1,531 einen geringen Brechwert. Diese Eigenschaft ist physikalische Grundlage für eine hohe Transmission.

Die Gläser weisen einen hohe Temperaturwechselbeständigkeit und eine gute Entglasungsstabilität auf.

Damit sind die Gläser hervorragend geeignet für die Verwendung als Substratglas in der Displaytechnik, insbesondere für TFT-Displays, und in der Dünnschicht-Photovoltaik.

## Patentansprüche

1. Alkalifreies Aluminoborosilicatglas, das folgende Zusammensetzung (in Gew.-% auf Oxidbasis) aufweist:
| | |
|---|---|
| SiO₂ | > 58 - 65 |
| B₂O₃ | > 6-11,5 |
| Al₂O₃ | > 20- 25 |
| MgO | 4 - < 6,5 |
| CaO | > 4,5 - 8 |
| SrO | 0 - < 4 |
| BaO | 0,5 - < 5 |
| mit SrO + BaO | > 3 |
| ZnO | 0-2 |

2. Aluminoborosilicatglas nach Anspruch 1,
**dadurch gekennzeichnet, daß** es wenigstens 20,5 Gew.-%, bevorzugt mehr als 21 Gew.-% Al₂O₃ enthält.

3. Aluminoborosilicatglas nach Anspruch 1 oder 2,
**gekennzeichnet durch**
folgende Zusammensetzung (in Gew.-% auf Oxidbasis):
| | |
|---|---|
| ZrO₂ | 0 - 2 |
| TiO₂ | 0 - 2 |
| Mit ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F⁻ | 0 - 1,5 |
| SO₄ ²⁻ | 0 - 1,5 |
| Mit As₂O₃ + Sb₂O₃ + SnO₂ + CeO₂ + Cl⁻ + F + SO₄²⁻ | 0 -1,5 |

4. Aluminiumborosilicatglas nach wenigstens einem der Ansprüche 1 bis 3
**dadurch gekennzeichnet,**
**daß** es bis auf unvermeidliche Verunreinigungen frei ist von Arsenoxid und Antimonoxid und **daß** es auf einer Floatglasanlage herstellbar ist.

5. Aluminoborosilicatglas nach wenigstens einem der Ansprüche 1 bis 4, das einen thermischen Ausdehnungskoeffizienten α_{20/300} von 2,8 · 10⁻⁶/K - 3,6 · 10⁻⁶/K, eine Transformationstemperatur Tg > 700 °C und eine Dichte p < 2,600 g/cm³ aufweist.

6. Verwendung des Aluminoborosilicatglases nach wenigstens einem der Ansprüche 1 bis 5 als Substratglas in der Displaytechnik.

7. Verwendung des Aluminoborosilicatglases nach wenigstens einem der Ansprüche 1 bis 5 als Substratglas in der Dünnschicht-Photovoltaik.

## Claims

1. Alkali-free aluminoborosilicate glass which has the following composition (in % by weight, based on oxide):
| | |
|---|---|
| SiO₂ | > 58 - 65 |
| B₂O₃ | > 6 - 11.5 |
| Al₂O₃ | > 20 - 25 |
| MgO | 4 - < 6.5 |
| CaO | > 4.5 - 8 |
| SrO | 0 - < 4 |
| BaO | 0.5 - < 5 |
| with SrO + BaO | > 3 |
| ZnO | 0 - 2 |

2. Aluminoborosilicate glass according to Claim 1, **characterized in that** it comprises at least 20.5% by weight, preferably more than 21% by weight, of Al₂O₃.

3. Aluminoborosilicate glass according to Claim 1 or 2, **characterized by** the following composition (in % by weight, based on oxide):
| | |
|---|---|
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | O - 1.5 |
| SnO₂ | O - 1.5 |
| CeO₂ | O - 1.5 |
| C1- | 0 - 1.5 |
| F- | 0 - 1.5 |
| SO₄²⁻ | 0 - 1.5 |
| with AS₂O₃ + Sb₂O₃ + SnO₂ + CeO₂ | 0 - 1.5 |
| + C1 + F- + SO₄²⁻ | |

4. Aluminoborosilicate glass according to at least one of Claims 1 to 3, **characterized in that** the glass is free of arsenic oxide and antimony oxide, apart from unavoidable impurities, and **that** it can be produced in a float-glass plant.

5. Aluminoborosilicate glass according to at least one of Claims 1 to 4, which has a coefficient of thermal expansion α_{20/300} of 2.8 · 10-⁶/K-3.6 . 10-⁶ /K, a glass transition temperature Tg of > 700°C and a density p of < 2.600 g/cm³.

6. Use of the aluminoborosilicate glass according to at least one of Claims 1 to 5 as substrate glass in display technology.

7. Use of the aluminoborosilicate glass according to at least one of Claims 1 to 6 as substrate glass in thin-film photovoltaics.

## Revendications

1. Verre de borosilicate d'aluminium exempt d'alcalis, qui présente la composition suivante (en % en poids sur la base des oxydes) :
| | |
|---|---|
| SiO₂ | >58-65 |
| B₂O₃ | >6-11,5 |
| Al₂O₃ | >20-25 |
| MgO | 4-<6,5 |
| CaO | >4,5-8 |
| SrO | 0-<4 |
| BaO | 0, 5-<5 |
| avec SrO + BaO | >3 |
| ZnO | 0-2. |

2. Verre de borosilicate d'aluminium selon la revendication 1, **caractérisé en ce qu'**il contient au moins 20,5 % en poids, de préférence plus de 21 % en poids d'Al₂O₃.

3. Verre de borosilicate d'aluminium selon la revendication 1 ou 2, **caractérisé par** la composition suivante (en % en poids sur la base des oxydes) :
| | |
|---|---|
| ZrO₂ | 0-2 |
| TiO₂ | 0-2 |
| avec ZrO₂ + TiO₂ | 0-2 |
| AS₂O₃ | 0-1, 5 |
| Sb₂O₃ | 0-1,5 |
| SnO₂ | 0-1,5 |
| CeO₂ | 0-1, 5 |
| Cl- | 0-1,5 |
| F- | 0-1,5 |
| SO₄2- | 0-1,5 |
| avec As₂O₃ + Sb₂O₃ + SnO₂ + CeO₂ + Cl- + F- + SO₄²⁻ | 0-1, 5 . |

4. Verre de borosilicate d'aluminium selon au moins l'une des revendications 1 à 3, **caractérisé en ce qu'**il est exempt, hormis les impuretés inévitables, d'oxyde d'arsenic et d'oxyde d'antimoine, et **en ce qu'**il peut être élaboré sur une unité de flottage.

5. Verre de borosilicate d'aluminium selon au moins l'une des revendications 1 à 4, qui présente un coefficient de dilatation thermique α₂₀/₃₀₀compris entre 2,8.10-⁶/K et 3,6.10-⁶/K, une température de transformation Tg > 700°C et une densité p<2,600 g/cm³.

6. Utilisation du verre de borosilicate d'aluminium selon au moins l'une des revendications 1 à 5 en tant que verre de support dans la technique de l'affichage.

7. Utilisation du verre de borosilicate d'aluminium selon au moins l'une des revendications 1 à 5 en tant que verre de support dans la technique photovoltaïque à couche mince.
